# EUROPEAN PATENT APPLICATION

(11) **EP 0 111 290 A1**
(43) Date of publication of application: **20.06.1984**
(21) Application number: 83112250.2
(22) Date of filing: 06.12.1983
(51) Int. Cl.: G01N 1/06, B23B 27/00

(54) **Corundum cutting element for a histology knife**

(30) Priority: 08.12.1982 US 447755
(71) Applicant: E.I. DU PONT DE NEMOURS AND COMPANY, Wilmington Delaware 19898 (US)
(72) Inventor: Johnson, George Howard, Wilmington Delaware 19810 (US)
(74) Representative: von Kreisler, Alek, Dipl.-Chem.

(57) **Abstract**

57 A cutting element for a histoloy knife having an edge formed by the juncture of two facets, the edge extending for a predetermined distance along a predetermined reference axis, is characterized in that the cutting element is formed of monocrystalline corundum material with the c axis of the crystal being oriented parallel to the reference axis and low index crystallographic m or a planes of corundum are parallel or near parallel to the facets of the cutting element.

## Description

### BACKGROUND OF THE INVENTION

This invention relates to a knife especially suitable for use in a microtome and, in particular, to a histology knife having a corundum cutting element in which the geometric boundaries of the cutting element have a predetermined orientation with respect to specified parameters of the corundum crystal.

### DESCRIPTION OF THE PRIOR ART

It is known to use glass and steel to fabricate a microtomy knife useful in histological or clinical applications to cut relatively thick sections of a specimen. The thickness of sections produced using a steel knife is on the order, of one-to-two to ten-to-twenty microns in thickness. A glass knife is able to produce sections from one-half to twenty microns in thickness.

However, the basic limitation of a glass or a steel knife is its short useful lifetime. This is due to the fact that these materials are not extremely hard and do not have a well defined crystal structure (i.e., they are amorphous). By way of example, a steel knife maintains its edge through the production of approximately five hundred to one thousand sections. As a result, when using a steel knife it is usually necessary that the blade be resharpened approximately every four hours. For a glass knife, only ten to twenty sections may be cut before the knife blade must be remade.

In order to avoid these relatively frequent resharpenings or remakings, as the case may be, it is known in the art to utilize relatively long-edged knives (six to ten inches in a steel knife, approximately two inches in a glass knife), in order to provide two or more cutting positions along the knife edge to section a sample block face having a typical length of three-fourths inch to one-and- one-half inch.

It is also known to utilize a diamond or glass ultramicrotomy knife for cutting thin sections. The diamond ultramicrotomy knife is able to produce ultrathin sections one-hundredth to one-fifth of a micron in thickness. The diamond's extreme hardness and well defined crystal structure impart a desirable durability to a knife blade made therefrom which is not exhibited by a histology or ultramicrotomy knife made of glass.

With regard to the hardness of the material, corundum or clear sapphire is the hardest material next to diamond with a well-defined crystal'structure which is available in large (i.e., greater than one centimeter in shortest dimension) crystal size. Such a material has been used previously in a knife. United States Patent 3,834,265, (issued to Tafapolsky et al.) discloses a cutting instrument formed of sapphire in which the cutting edge lies parallel to or within thirty degrees of the optic axis of the sapphire crystal. United States Patent 3,543,402 (issued to Seager) utilizes randomly oriented polycrystalline sapphire with an included angle of ten to forty degrees to provide a ceramic cutting blade. United States Patent 3,911,579 (issued to Lane et al.) relates to a three hundred Angstrom thick corundum layer deposited on a sharpened, hardened, tool steel razor blade with an included angle of fifteen to twenty-five degrees. However, no orientation of the parameters of the corundum crystal with respect to the geometric boundaries of the edge is defined. Soviet Patent 876,920 refers to the orientation of monocrystalline sapphire for maximum hardness but discloses a tip radius and depth of cut of one hundred fifty microns and an included angle of twenty-five degrees.

Crystal growing technology now exists to produce single crystals of corundum large enough to be useful in making a long edge length histology knife (greater than three-fourths inch in length) for thick sectioning. Corresponding crystal growing technology does not exist for diamond. Accordingly, it is believed advantageous to utilize the inherent hardness of corundum to fabricate a cutting element useful for a histology knife.

### SUMMARY OF THE INVENTION

This invention relates to a cutting element useful for a histology knife where the cutting element has an edge formed by two facets of a material having a hexagonal close-packed structure such as monocrystalline corundum. The geometric boundaries of the cutting element are oriented precisely along three predetermined crystallographic directions of the corundum crystal. In particular, the optic or c axis of the corundum crystal is oriented and extends parallel to the cutting edge of the cutting element and each facet of the cutting element is perpendicular to either an m-type or an a-type axis of the crystal. Alternately stated, each facet of the cutting element is parallel or near parallel to either an m-type or an a-type plane of the crystal structure. The facets define an included knife angle that is symmetric (i.e., equal half-angles) about a knife centerline passing through the edge.

In one embodiment of the invention the m-type axes of the corundum crystal extend perpendicular to the facets of the cutting element. That is, the facets of the cutting element are aligned with the crystallographic faces of a hexagonal prism of the first order (i.e., m-type planes of the crystal). In an alternate embodiment the a-type axes of the corumdum crystal extend perpendicular to the facets of the cutting element. In this embodiment the facets of the cutting element are aligned with the crystallographic faces of a hexagonal prism of the second order (i.e., a-type planes of the crystal). In each of these embodiments, the crystal orientation is symmetric, with a preferred included angle of sixty degrees plus or minus fifteen degrees. In a third embodiment of the invention one facet of the cutting element is perpendicular to an a-type axis of the corundum crystal (parallel to an a-type plane of the crystal) while the other facet of the cutting element is perpendicular to an m-type axis of the corundum crystal (parallel to an m-type plane of the crystal). In the third embodiment of the invention the included angle is thirty degrees, plus or minus fifteen degrees and the crystal orientation is asymmetric.

With a cutting element in accordance with this invention, the edge diameter is less than one-fourth (0.25) micron, the edge length is in the range from three-fourths inch to approximately three inches, and the cutting element is adapted to cut sections in the range from one-half to twenty microns thick. Such a cutting element is able to produce in excess of ten thousand sections without need of resharpening.

### BRIEF DESCRIPTION OF THE DRAWINGS

The invention will be more fully understood from the following detailed description taken in connection with the accompanying drawings, which form a part of this application and in which:
Figure 1 is a highly stylized representation of the arrangement whereby histological sections are cut using a microtome;
Figure 2 is a perspective view of a cutting element in accordance with this invention shown with respect to the axes of a hexagonal coordinate system;
Figure 3A is a highly stylized view of a monocrystalline corundum crystal illustrating the orientation of predetermined crystallographic planes of the corundum crystal with respect to the axes of a hexagonal coordinate system while Figure 3B is a plan view of the crystal planes shown in Figure 3A; and
Figures 4, 5, and 6 are diagrammatic views of the orientation of predetermined crystallographic planes of the corundum crystal with respect to the geometric boundaries of preferred embodiments of the invention.

### DISCLOSURE OF THE INVENTION

Throughout the following disclosure similar reference characters refer to similar elements in all figures of the drawings.

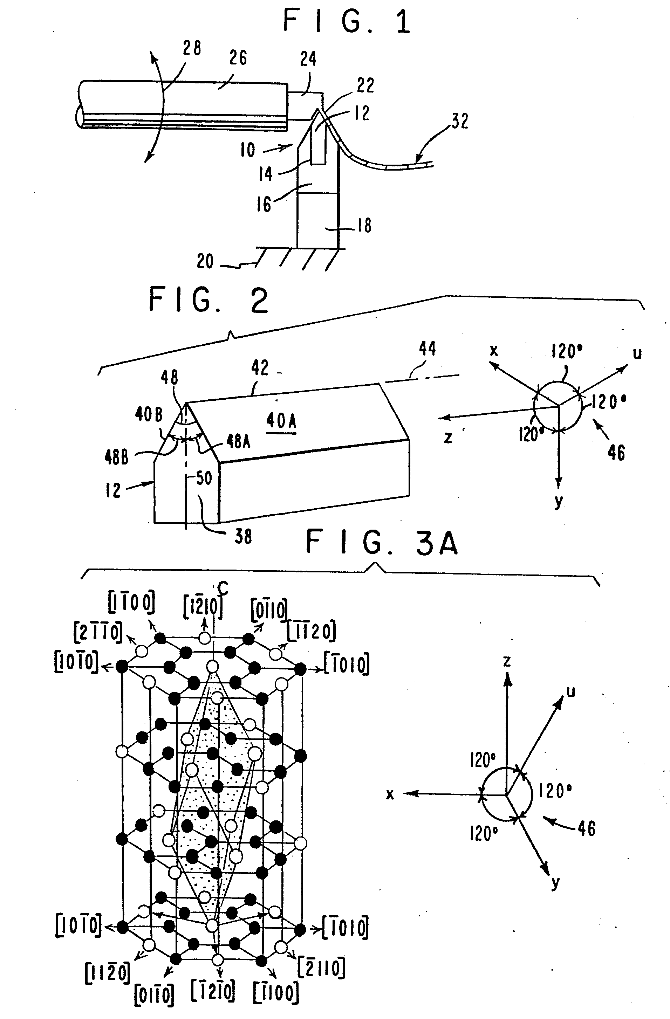

In Figure 1 a histology knife generally indicated by reference character 10 is comprised of a cutting element 12 in accordance with the teachings of this invention mounted in a slot 14 at the upper end of a shank or knife support 16. The knife 10 is mounted in a clamp 18 supported on a microtome stage 20. In the highly stylized illustration shown in Figure 1 the knife 10 is being utilized to slice a section 22 from a sample of tissue contained in a sample block 24 carried at the end of a specimen arm 26 as the specimen arm 26 is moved in a direction 28 with respect to the knife 10. The sections being cut form a ribbon 32 that may be manipulated by tweezers or other implements to a separate warm liquid bath (not shown). The individual sections in the ribbon 32 are later separated and are placed upon a microscope slide or other deposition surface, all in accordance with well-known histological principles and practices.

As seen from the perspective view shown in Figure 2, the cutting element 12 includes a main body portion 38 which is configured to be received in the corresponding slot 14 (Figure 1) provided in the upper end of the shank 16. The cutting element 12 has first and second facets 40A and 40B,
respectively, which meet and form an extended cutting edge 42. The cutting edge 42 extends a predetermined distance measured along a reference axis 44. The reference axis 44 is parallel to the z axis of a hexagonal coordinate system 46. Therefore, the side facets of the main body portion 38 are perpendicular to the z axis. In the hexagonal coordinate system 46 the z axis extends perpendicular to a plane containing the x, y and u axes, wherein each of the x, y and u axes are disposed at angles of one hundred twenty degrees with respect to each other. The facets 40A and 40B cooperate to subtend an included angle 48 that is symmetric about a centerline 50 (i.e., equal half angles 48A and 48B between the centerline and each facet). The centerline 50 in Figure 2 is the edge of a plane which extends through the cutting element as a bisector of the included angle 48. The bisector plane includes the edge 42 so that the centerline 50 passes through the edge 42.

The cutting element 12 in accordance with the preferred embodiment of this invention is fabricated from a monocrystalline corundum crystal, for example, such as that grown using the Schmid-Viechnicki process or the Edge-defined, Film-fed Growth (EFG) process. Crystals suitable for use in fabricating the cutting element 12 are available from Crystal Systems Incorporated, Salem, ! Massachusetts (Schmid-Viechnicki process) or Tyco Laboratories Inc., Milford, New Hampshire (EFG ! process). Such crystals are very high quality single crystals containing only few impurities or translocational defects. It should be noted, however, that any material with sufficient hardness for the application at hand, having a hexagonal close-packed structure, may be used and remain within the contemplation of this invention.

The crystallography of corundum (alpha-Al₂0₃) is a structure based on a hexagonal prism. The structure may be described with reference to Figure 3A using the hexagonal coordinate system 46. In descriptive minerological terms when the crystal is oriented with respect to the hexagonal coordinate system 46 the z axis corresponds to the optic axis of the crystal and is commonly referred to as the "c" axis. Crystallographic planes in a hexagonal system are described using the Miller-Bravais system (h, k, i, 1) where the indices are the lowest mutually consistent interger multiples i of the plane's reciprocal intersections with the corresponding x, y, u or z axes. It should be noted that in the Miller-Bravais system of notation the symbol 1 equals minus 1. The four elementary planes of corundum (the hexagonal close-packed structure) are given in the following Table:

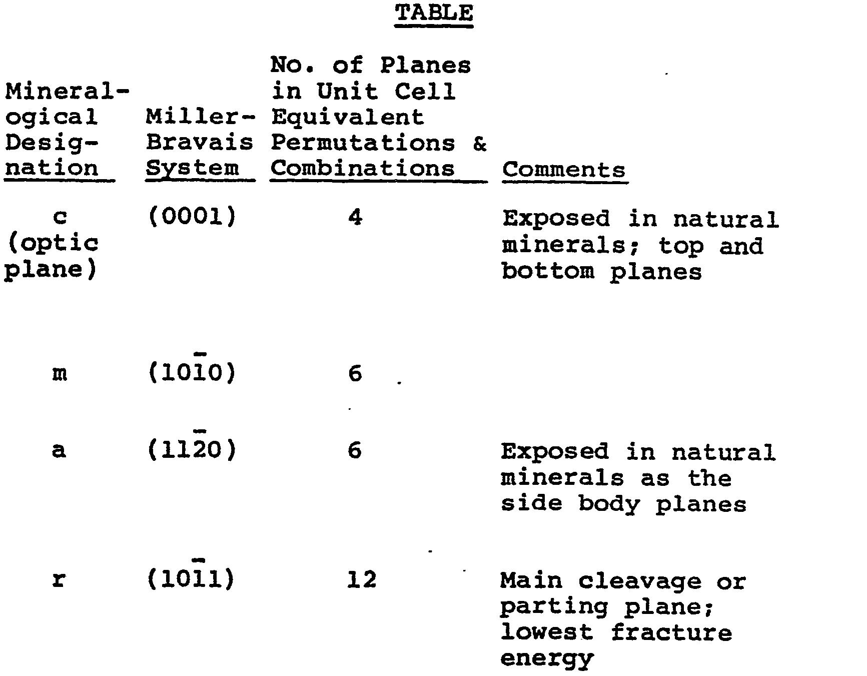

In Figure 3A the crystallographic axes and several of the planes identified in accordance with the Table are seen. In Figure 3A the distribution of the Al⁺³ ions are indicated by filled-in dots while the open circles indicate the sites which are not occupied by aluminum ions. The 0-² ions are not illustrated for clarity of illustration.

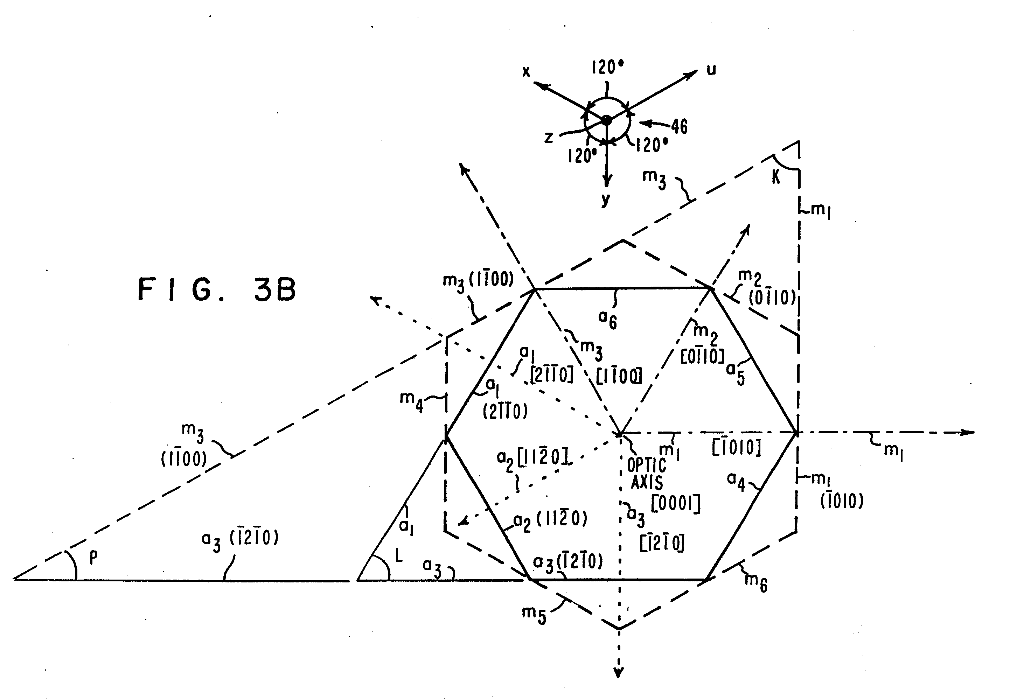

Figure 3B, which is a plan view of the crystal shown in Figure 3A, illustrates the orientation of the various crystallographic axes and planes of the corundum crystal in the x-y-u plane of the hexagonal coordinate system 46. The z axis of the coordinate system 46 extends out of the plane of Figure 3B.

As seen in Figure 3B, the faces of an hexagonal prism of the first order, or the m-type planes of the corundum crystal, are indicated by dashed lines and are denoted by reference characters ^{m}ₗ, ^{m}₂,...m₆. Each of the m-type planes is perpendicular to its associated m-type axis. The m-type axes are illustrated using dot-dash lines and extend radially outwardly from the optic, or c axis of the crystal. The c axis of the crystal shown in Figure 3B is coincident with the z axis of the hexagonal coordinate system 46.

The faces of a hexagonal prism of the second order, or the a-type planes of the corundum crystal, are also indicated in Figure 3B by solid lines. The a-type planes are denoted by reference characters aₗ, a₂...a₆. Each of the a-type planes is perpendicular to its associated a-type axis. The a-type axes are illustrated in Figure 3B by dotted lines. The a-type axes extend radially outwardly from the c axis of the crystal.

In accordance with this invention the cutting element 12 is formed of monocrystalline corundum with the geometric boundaries of the cutting element 12 being arranged such that the c axis [0001] of the crystal lies parallel to the geometric reference axis 44 (Figure 2) defined by the cutting edge 42 of the cutting element 12. Additionally, in accordance with the present invention each facet 40A and 40B of the cutting element 12 is perpendicular to either an m-type or an a-type axis of the crystal. Alternately stated, each facet 40A and 40B is parallel or near-parallel to one of the low index m-type or a-type planes of the crystal. Preferably, the facets 40A and 40B are each ground such that the included angle 48 subtended thereby is symmetric (i.e., equal half angles 48A and 48B about the centerline 50 in Figure 2).

It is believed that when the geometric boundaries of the cutting element 12 are oriented in the manner as discussed herein with respect to predetermined crystallographic axes and crystallographic planes of the corundum crystal an improved cutting element is provided.

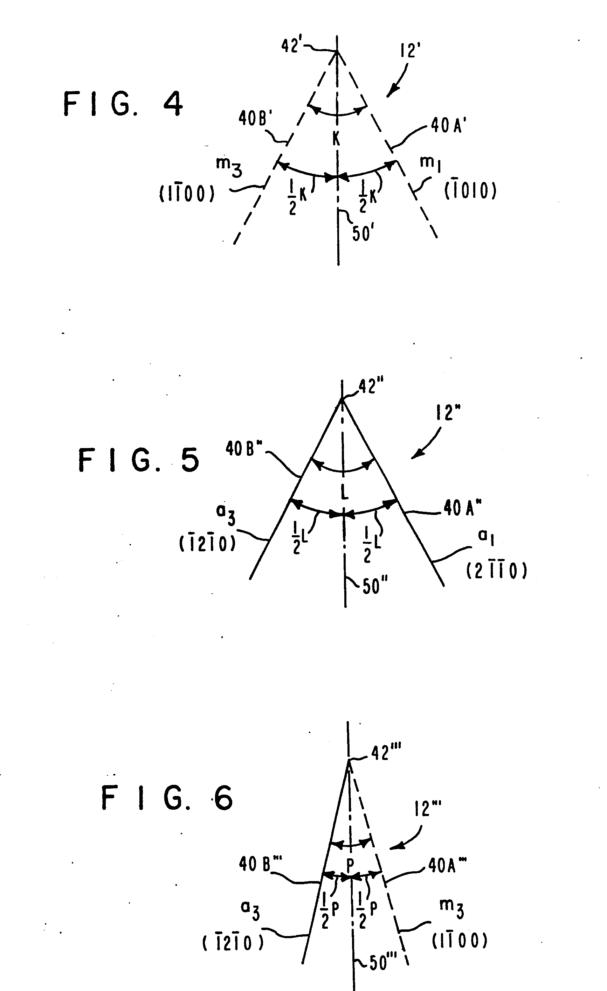

With reference to Figures 3B and 4, one embodiment of a cutting element 12' in accordance with the invention is illustrated. In this embodiment, the facets 40A' and 40B' of the cutting element 12' are each perpendicular to an m-type axis of the crystal such that the included angle K defined therebetween is sixty degrees. As an example of this embodiment of the invention a cutting element 12' may be formed such that facet 40A' thereof is perpendicular to the axis mₗ [IOlO] and, thus, parallel to the mi plane (1010). The facet 40B' of the cutting element 12' is perpendicular to the axis m₃ [1100 and is parallel to the m₃ plane (1100). In such a case the included angle K is sixty degrees. In accordance with this invention the included angle K may be plus or minus fifteen degrees of the preferred angle of sixty degrees. That is, the included angle K lies within the range from forty-five to seventy-five degrees. In the case of this embodiment the crystal orientation is symmetric. The angle K is symmetric about the centerline 50'. That is, the included angle K is defined by equal half angles each in the range from twenty-two and one-half degrees to thirty-seven and one-half degrees. The half angles are defined beween the centerline 50' and the facets 40A' and 40B'. The centerline passes through the knife edge 42'. Of course it should be noted that other of the m-type planes may be selected such that the included angle K is within the preferred range.

An alternate embodiment of a cutting element 12" in accordance with the invention is shown in Figures 3B and 5. In this embodiment, the facets 40A" and 40B" of the cutting element 12" are each perpendicular to an a-type axis of the crystal, with the included angle L therebetween being sixty degrees. For example, a cutting element 12" .may be formed such that the facet 40A" of the cutting element 12" is perpendicular to the axis aₗ [2110] and is therefore parallel to the aₗ plane (2110). The facet 40B" of the cutting element 12" may be perpendicular to the axis a3 [1210]and parallel to the a3 plane (1210). In this example of this embodiment of the invention, the crystal is symmetric and the included angle L is sixty degrees. The included angle L may be plus or minus fifteen degrees of the preferred angle of sixty degrees. - Thus, the included angle L may lie within the range from forty-five to seventy-five degrees and produce a cutting element 12". In the case of this embodiment the crystal orientation is also symmetric. The angle L is symmetric about the centerline 50". That is, the included angle L is defined by equal half-angles between the centerline 50" and the facets 40A" and 40B". The half angles are each in the range from twenty-two and one-half degrees to thirty-seven and one-half degrees. The centerline 50" passes through the edge 42". Of course, it should be noted that other of the a-type planes may be selected such that the included angle L is within the preferred range.

An example of another alternate embodiment of the invention is shown by Figures 3B and 6. In this example, one facet of the cutting element 12 " ' is perpendicular to an a axis of the crystal while the second facet of the cutting element 12 " ' is perpendicular to an m-type axis. In this example the crystal orientation is asymmetric. As is shown in Figures 3B and 6, one facet 40A'" of the cutting element 12'" is perpendicular to the axis m₃ [1100] and the facet 40B'" of the cutting element l2'" is perpendicular to the axis a3 [12101. In this example, the included angle P is thirty degrees, plus or minus fifteen degrees. The angle P thus lies within the range from about fifteen to about forty-five degrees. The angle P is symmetric about the centerline 50'" which passes through the edge 42'''. That is, the included angle P is defined by equal half angles defined between the centerline 50''' and the facets 40A''' and 40B'''. The half angles are each in the range from seven and one-half degrees to twenty-two and one-half degrees. Of course it should be noted that other of the m-type and a-type planes may be selected such that the included angle P is within the preferred range.

A cutting element 12 in accordance with this invention and a knife 10 incorporating the same may be manufactured using conventional procedures. The corundum crystal is mounted in the shank 16 using silver solder or powder metallurgy techniques. The facets 40A and 40B are roughly ground on a hardened tool steel lap running at three to ten thousand revolutions per minute using coarse alumina or diamond grit (five to fifteen micron size) dispersed in a heavy grease or oil. The finished facets are edge ground on similar laps using very fine alumina powder (0.25 micron size) dispersed in grinding media like glycerol or olive oil commonly used in gemology. In accordance with standard practice, the edge of the cutting element is visually inspected by a high powered microscope in the range 500X to 1000X (e.g., a Leitz microscope at 800X) to observe that there are no flaws detectable under this magnification for the entire length of the edge. If desired, to further finish the facets and edge for producing a cutting element adapted to cut ultrathin sections (one-hundredth to one-fifth of a micron thick) versus histology sections (one-half to twenty microns thick), it may be necessary to etch the facets using a standard etchant such as orthophosphoric acid (85-90%) at 350°C in a platinum crucible for two to five minutes. Of course other etchants may be used for various times at various temperatures.

Those skilled in the art, having benefit of the teachings of this invention as.hereinabove set forth may effect numerous modifications thereto. However, -these modifications are to be construed as lying within the scope of this invention, as defined in the appended claims.

## Claims

1. A cutting element having a first and a second facet meeting to form an edge extending for a predetermined distance along a predetermined reference axis, the cutting element being formed of monocrystalline material having a hexagonal close-packed structure oriented such that the c axis of the crystal lies parallel to the reference axis of the cutting element, each facet of the cutting element being perpendicular to either an m-type or an a-type axis of the crystal.

2. The cutting element of claim 1 wherein the first and the second facets are each perpendicular to an m-type axis of the crystal.

3. The cutting element of claim 1 wherein the first and second facets are each perpendicular to an a-type axis of the crystal.

4. The cutting element of claim 1 wherein one facet of the cutting element is perpendicular to an m-type axis of the crystal and the second facet of the cutting element is perpendicular to an a-type axis of the crystal.

5. The cutting element of'claims 1 - 4 wherein the included angle between the facets lies in the range from fifteen to forty-five degrees.

6. The cutting element of claims 1 - 5 wherein the included angle is thirty degrees.

7. The cutting element of claims 1 - 6 wherein the material is corundum.

8. A knife comprising: a shank and a cutting element according to claims 1 -.7 mounted in the shank.

9. A method of manufacturing a knife comprising the steps of:
a) forming from a monocrystalline .material having a hexagonal close-packed structure a cutting element having a first and a second facet meeting to form an edge extending for a predetermined distance along a reference axis oriented such that the c axis of the crystal lies parallel to the reference axis and each facet is perpendicular to either an m-type or an a-type axis of the crystal; and
b) mounting the cutting element in a shank.

10.1 A cutting element having a first and a second facet meeting to form an edge extending for a predetermined distance along a predetermined reference axis, the cutting element being formed of monocrystalline material having a hexagonal close-packed structure oriented such that the c axis of the crystal lies parallel to the reference axis of the cutting element, each facet of the cutting element being perpendicular to either an m-type or an a-type axis of the crystal, the facets defining an included angle that is symmetric about a centerline passing through the edge.

11. The cutting element of claim 10 wherein the first and second facets are each perpendicular to an m-type axis of the crystal.

12. The cutting element of claim 1-0 wherein the first and second facets are each perpendicular to an a-type axis of the crystal.

13.The cutting element of claim 10 wherein one facet of the cutting element is perpendicular to an m-type axis of the crystal and the second facet of the cutting element is perpendicular to an a-type axis of the crystal.

14. The cutting element of claims 10 - 13 wherein the included angle comprises equal half angles each defined between the centerline and a facet and wherein each half angle lies in the range from seven and one-half to twenty-two and one-half degrees.

15. The cutting element of claims 10 - 14 wherein each half angle is fifteen degrees.

_{16.} The cutting element of claims 10 - 15 wherein the material is corundum.

17. A knife comprising a shank, and a cutting element according to claims 10 to 16.
